**Europäisches Patentamt**

**European Patent Office**

**Office européen des brevets**

(11) Veröffentlichungsnummer: **0 347 489 B1**

## EUROPÄISCHE PATENTSCHRIFT

(45) Veröffentlichungstag der Patentschrift: **04.03.92**

(21) Anmeldenummer: **88113037.1**

(22) Anmeldetag: **11.08.88**

(51) Int. Cl.⁵: **A01K 61/00**

(54) **Offshore-Fischfarm zur Aufzucht und Haltung von Fischen oder dergleichen Wassertieren.**

(30) Priorität: **24.06.88 DE 3821327**

(43) Veröffentlichungstag der Anmeldung:
**27.12.89 Patentblatt 89/52**

(45) Bekanntmachung des Hinweises auf die Patenterteilung:
**04.03.92 Patentblatt 92/10**

(84) Benannte Vertragsstaaten:
**ES FR GB GR IT NL SE**

(56) Entgegenhaltungen:
**EP-A- 0 146 518**
**EP-A- 0 165 160**
**EP-A- 0 182 313**
**WO-A-87/04590**
**FR-A- 2 436 560**

(73) Patentinhaber: **Langlie, Carsten, Prof. Dr.-Ing.**
**Briller Höhe 4a**
**W-5600 Wuppertal 1(DE)**

(72) Erfinder: **Langlie, Carsten, Prof. Dr.-Ing.**
**Briller Höhe 4a**
**W-5600 Wuppertal 1(DE)**

(74) Vertreter: **Honke, Manfred, Dr. et al**
**Patentanwälte Andrejewski, Honke & Partner**
**Theaterplatz 3 Postfach 10 02 54**
**W-4300 Essen 1(DE)**

## Beschreibung

Die Erfindung betrifft eine Offshore-Fischfarm zur Aufzucht und Haltung von Fischen oder dergleichen Wassertieren, mit einer halbtauchfähigen Schwimmplattform, einem Grundrahmen und die Schwimmplattform mit dem Grundrahmen verbindenden flutbaren Auftriebssäulen und mit einem oder mehreren begrenzten Aufenthaltsräumen für die Fische, wobei in die Schwimmplattform aufenthaltsräumebildende Fischsilos eingesetzt sind.

Bei der Aufzucht und Haltung von Fischen werden unterschiedliche Produktionssysteme eingesetzt. So kennt man die konventionelle Teichwirtschaft mit stehendem Wasser oder durchfließendem Wasser. Teichwirtschaft mit stehendem Wasser verlangt Wasseraufbereitung. In beiden Fällen ist häufig Sauerstoffversorgung im Wege der Belüftung erforderlich. Bei neueren Produktionssystemen finden Fischbecken oder Netzgehege Verwendung. Auch bei Fischbecken findet die Wassererneuerung entweder durch ständig durchfließendes Wasser oder im Wege der Wasseraufbereitung statt. Außerdem erfolgt eine Belüftung und Sauerstoffbegasung der Fischbecken. Bei Netzgehegen resultiert die Wassererneuerung aus dem umgebenden Gewässer, während eine Belüftung nicht unbedingt erforderlich ist. Allerdings sind Netzgehege aus anderen Gründen problematisch. Denn sie bilden keine hinreichende Abschirmung einerseits gegen mechanische Umwelteinflüsse, andererseits gegen Umweltverschmutzungen wie Ölpest, Algenpest oder dergleichen. Mechanische Umwelteinflüsse wie beispielsweise Treibholz, gegebenenfalls auch Treibeis und insbesondere angreifende Raubfische können zu einer so weitgehenden Beschädigung und schließlich Zerstörung der Netzgehege führen, daß die gesamte Fischproduktion verlorengeht. Das gilt vor allem dann, wenn die Fischproduktion bzw. Fischzucht und -haltung in einer Offshore-Fischfarm erfolgt. Denn in diesem Fall sind die Standortbedingungen besonders rauh. Außerdem sind Netzgehege gegen Diebstahl und Sabotage nicht hinreichend sicher.

Im übrigen kennt man eine Offshore-Fischfarm der eingangs beschriebenen Ausführungsform, bei welcher als Fischsilos Fischbeutel in die Schwimmplattform eingesetzt sind (WO-A-8704590). Derartige Fischbeutel sind wasserundurchlässig und müssen folglich ebenso mit Frischwasser wie mit Sauerstoff versorgt werden. Tatsächlich handelt es sich um praktisch geschlossene Aufenthaltsräume für die Fische, die jedenfalls keinen Wasserdurchfluß zulassen.

Außerdem kennt man Zuchtkäfige zur Aufzucht und Haltung von Fischen, die aufschwimmen und am Meeresboden verankert werden. Diese Zuchtkäfige weisen eine Licht- und Sauerstoffkuppel auf.

Ferner ist an den trichterförmigen Boden eine Abführleitung für Verunreinigungen angeschlossen, die zum Abführen von Futterresten, Ausscheidungen oder anderen Verschmutzungen dient (EP-A-146518). Die Schwimmfähigkeit dieser unterhalb des Meeresspiegels verankerten Zuchtkäfige wird über eine rohrförmige Rahmenkonstruktion erreicht, die mit Luft oder Kunststoffschaum gefüllt ist. Die Rahmenkonstruktion dient zur Befestigung eines Kunststoffnetzes. Insoweit handelt es sich um eine verhältnismäßig instabile Fischzuchtanlage.

Der Erfindung liegt die Aufgabe zugrunde, eine Offshore-Fischfarm der eingangs beschriebenen Art zu schaffen, bei welcher eine einwandfreie Aufzucht und Haltung von Fischen gegen in mechanischer Hinsicht schädliche Umwelteinflüsse ebenso sichergestellt ist wie gegen Umweltverschmutzung.

Diese Aufgabe löst die Erfindung bei einer gattungsgemäßen Offshore-Fischfarm dadurch, daß die Fischsilos jeweils verschließbare Gitterfenster mit Fenstergittern mit hinreichender Stabilität gegen mechanische Beanspruchungen und fischundurchlässiger Engmaschigkeit sowie in an sich bekannter Weise eine Entsorgungseinrichtung für Verunreinigungen aufweisen. Bei den Verunreinigungen kann es sich um Ausscheidungen der Fische, Futterreste oder andere Verschmutzungen handeln. - Im Rahmen der Erfindung bilden die in das jeweilige Gewässer eintauchenden Fischsilos und ihre Gitterfenster einen einwandfreien mechanischen Schutz gegen schädliche Umwelteinflüsse durch mechanische Beanspruchungen wie Treibholz, gegebenenfalls Treibeis aber auch angreifende Raubfische, Diebstahl und Sabotage. Dazu weiser die Fenstergitter nicht nur hinreichende Stabilität auf, sondern auch die erforderliche Engmaschigkeit. Darüber hinaus wird aber auch einwandfreier Schutz gegen Umweltverschmutzungen wie Ölpest, Algenpest oder dergleichen erreicht, weil sich in einem solchen Fall die Gitterfenster rechtzeitig verschließen lassen.

Während die geöffneten Gitterfenster einen ständigen Wasserdurchfluß gewährleisten kann bei geschlossenen Gitterfenstern Frischwasserzufuhr aus größerer Wassertiefe und gegebenenfalls Belüftung bzw. Sauerstoffbegasung erfolgen. Eine andere Möglichkeit besteht darin, die Offshore-Fischfarm in andere von der Umweltverschmutzung unberührte Gewässer zu verfahren und dort zu verankern. Die Entsorgungseinrichtung sorgt für die rechtzeitige Abführung der Verunreinigungen, damit keine Selbstvergiftung durch beispielsweise Ammoniakbildung eintritt. Tatsächlich gelingt es mit der erfindungsgemäßen Offshore-Fischfarm, die Fischproduktion mit Hilfe natürlicher Standortbedingungen zu intensivieren, ohne daß eine Unterbrechung der Wasserversorgung der Verschlechterung der Wasserqualität zu Produktionsrückschlägen führen kann. Im Ergebnis wird eine äußerst natürliche und sichere Fischhaltung gewährleistet, wobei sich die erfindungsgemäße Offshore-Fischfarm durch kombinierte Sicherheitsmaßnahmen gegen einerseits schädliche Umwelteinflüsse durch Umweltverschmutzung und andererseits schädliche Umwelteinflüsse durch innere und äußere mechanische Beanspruchungen auszeichnet.

Weitere erfindungswesentliche Merkmale sind im folgenden aufgeführt. So können die Schwimmplattform und der Grundrahmen rahmenbildende Einhängedurchbrechungen für die Fischsilos aufweisen. Dadurch wird ein lagestabiler Einbau der Fischsilos erreicht. Die Fischsilos lassen sich unschwer mittels Hebezeuge in die Einhängedurchbrechungen einsetzen. Um die Montage bzw. Demontage der Fischsilos besonders leicht und einfach zu gestalten, sieht die Erfindung vor, daß die Fischsilos in über ihrem Umfang und an dem Umfang der Einhängedurchbrechungen verteilten Vertikalführungen in der Schwimmplattform und dem Grundrahmen höhenbeweglich geführt und in vorgegebenen Höhenverstellungen arretierbar sind. Durch die Höhenverstellung der Fischsilos läßt sich deren Wassereintauchtiefe ebenso variieren wie durch das Fluten oder Lenzen der Auftriebssäulen, die mit Lenzpumpen ausgerüstet sind. Weiter können mehrere Fischsilos in eine durch Querstege entsprechend unterteilte Einhängedurchbrechung von Schwimmplattform und Grundrahmen eingesetzt sein. Nach einem besonderen Vorschlag der Erfindung ist vorgesehen, daß die Fischsilos aus mehreren nebeneinander und/oder übereinander angeordneten Siloelementen baukastenartig bzw. zerlegbar zusammengesetzt und jedes Siloelement ein oder mehrere verschließbare Gitterfenster aufweist. Dieses Baukastensystem ermöglicht den Einsatz von Fischsilos verschiedener Größen, die im übrigen einen runden oder mehreckigen Querschnitt aufweisen können. Die Fischsilos selbst bestehen vorzugsweise aus korrosionsbeständigem Stahl, Stahlbeton oder Kunststoff, z. B. glasfaserverstärktem Kunststoff. Dabei kann der Kunststoff lichtdiffus, durchsichtig oder undurchsichtig sein, nämlich in Abhängigkeit von den aufzuziehenden Fischarten. Als glasfaserverstärkter Kunststoff kommen bevorzugt Polyester- bzw. Epoxyd- oder Polyvinylesterharze in Frage. Als thermoplastische Kunststoffe sind hauptsächlich Polyäthylen, Polypropylen und Polyvinylidenfluorid vorgesehen. Derartige Silomaterialien sind lichtstabiler als Gehegematerialien aus Netzen oder Folien. Die größere Werkstoffdicke der Fischsilos verstärkt diese Wirkung durch die Tiefenabsorption der Sonnenstrahlen. Die geometrisch bedingte konstruktive Festigkeit kombiniert mit einer hervorragenden Beständigkeit der Silokonstruktion gegenüber Errosion und Korrosion (UV) ermöglicht kalkulierbare Unterhaltungskosten und Abschreibungszeiträume. Ferner sieht die Erfindung vor, daß die Fischsilos jeweils einen trichterartigen Boden aufweisen und im Bodentiefsten eine Pumpe mit einer absperrbaren Abführleitung als Entsorgungseinrichtung für die Abscheidungen der Fische, Futterreste und sonstige Verunreinigungen angeordnet ist. Weiter sind die Fischsilos zweckmäßigerweise mit Frischwasserleitungen und Leitungen zur Belüftung bzw. Sauerstoffbegasung ausgerüstet, d. h. derartige Leitungen tauchen in den Fischsilos ein und werden beispielsweise im Katastrophenfall benötigt, wenn die Gitterfenster wegen Umweltverschmutzung verschlossen werden müssen und dadurch der durchlaufende Wasserstrom unterbrochen wird. An die Frischwasserleitungen bzw. Sauerstoff- oder Belüftungsleitungen sind selbstverständlich entsprechende Förderpumpen angeschlossen.

Nach einem Vorschlag der Erfindung mit selbständiger Bedeutung ist vorgesehen daß die Gitterfenster mittels manuell oder motorisch betriebener Schieber oder Hubtore verschließbar sind. Die Fenstergitter bestehen aus hochfestem Kunststoff oder korrosionsbeständigem Stahl, sind also in der Lage, die zu erwartenden mechanischen Beanspruchungen oder Beschädigungen aufzunehmen.

Im folgenden wird die Erfindung anhand einer lediglich ein Ausführungsbeispiel darstellenden Zeichnung näher erläutert. Es zeigen.

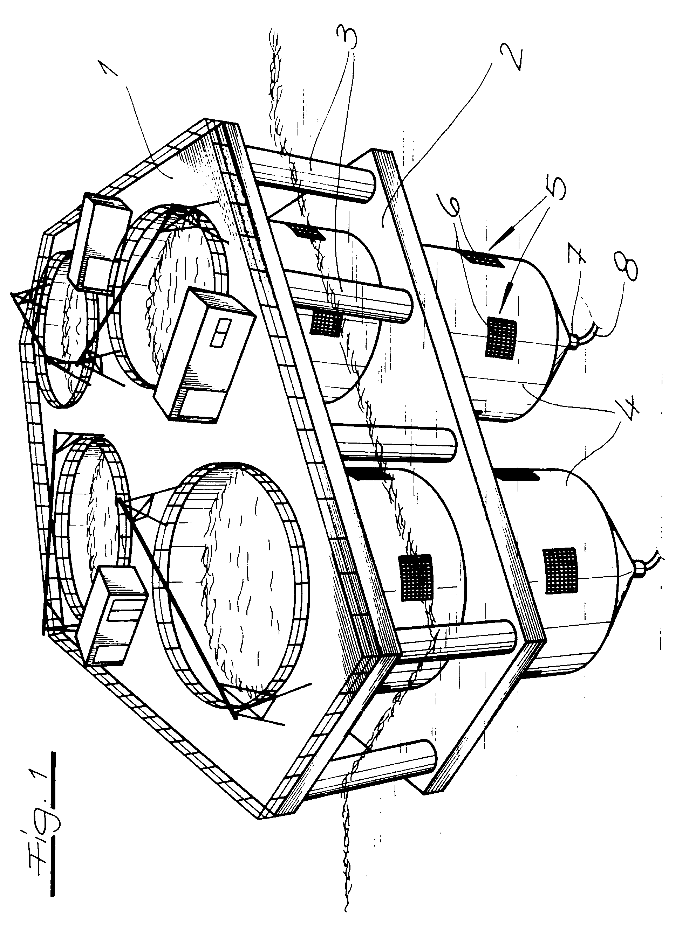

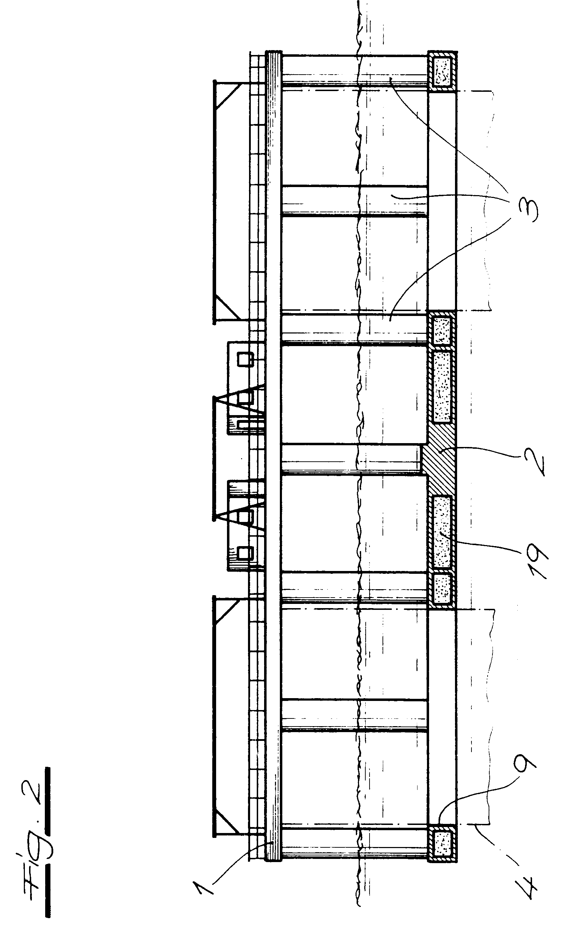

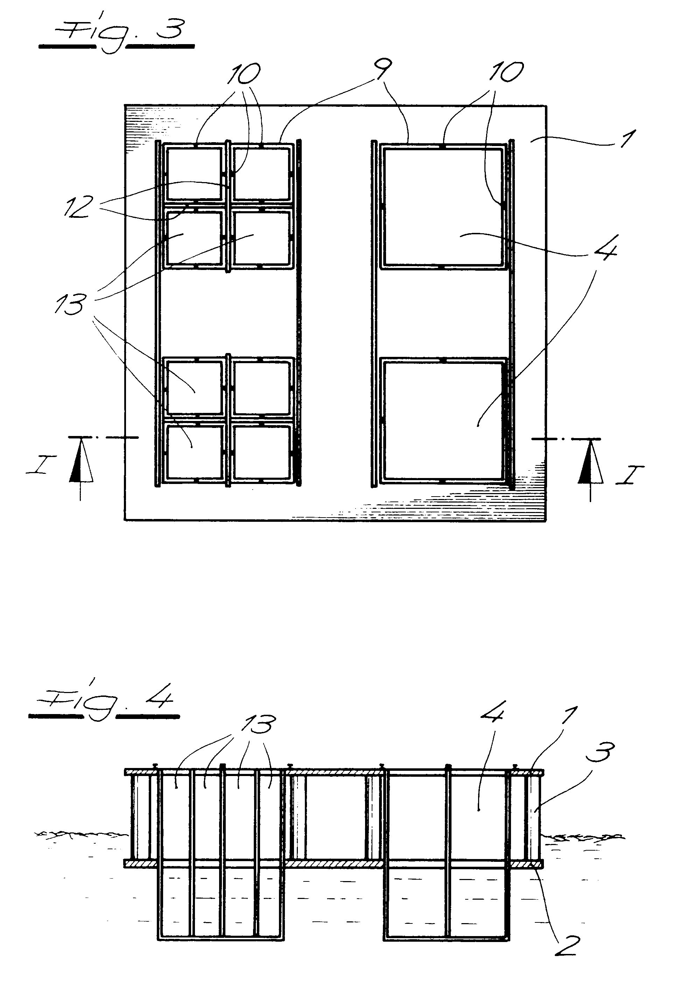

Fig. 1    eine erfindungsgemäße Offshore-Fischfarm in perspektivischer Darstellung

Fig. 2    den Gegenstand nach Fig. 1 in Frontansicht und teilweisem Vertikalschnitt,

Fig. 3    in schematischer Draufsicht die Schwimmplattform für den Gegenstand nach Fig. 1 ohne Aufbauten,

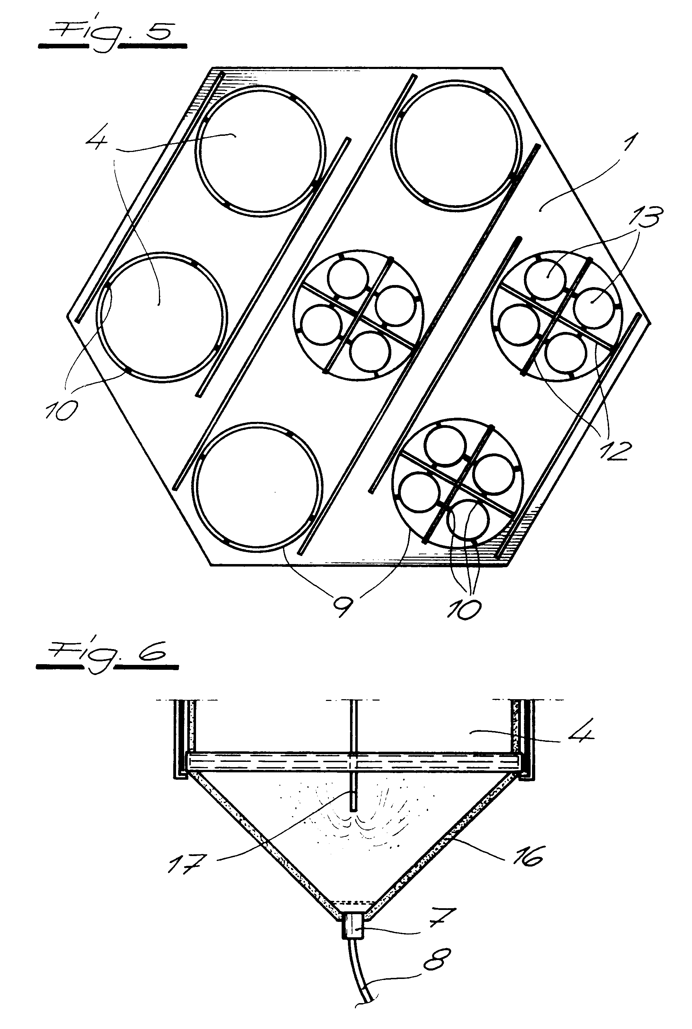

Fig. 4    einen Schnitt 1-1 durch den Gegenstand nach Fig. 3,

Fig. 5    eine abgewandelte Ausführungsform des Gegenstandes nach Fig. 3,

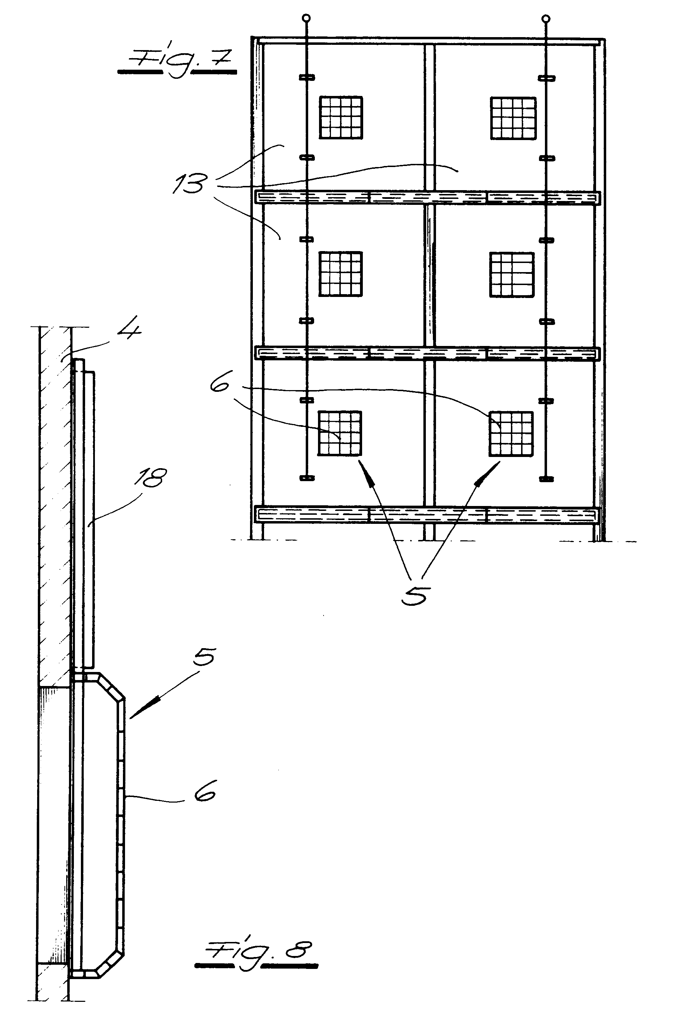

fig. 6    einen teilweisen Vertikalschnitt durch den Boden eines Fischsilos,

Fig. 7    in schematischer Frontansicht ein Fischsilo aus mehreren Siloelementen,

Fig. 8    einen teilweisen Vertikalschnitt durch ein Gitterfenster für den Gegenstand nach Fig. 1,

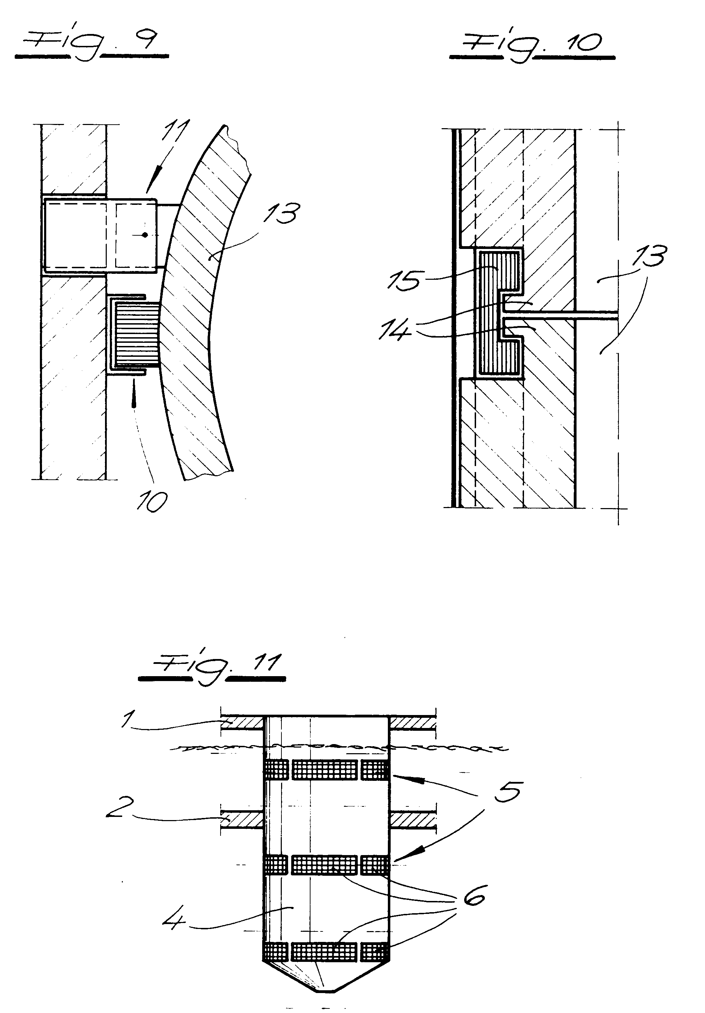

Fig. 9    einen teilweisen Horizontalschnitt durch die Vertikalführung für ein Fischsilo,

Fig. 10    einen teilweisen Vertikalschnitt im Verbindungsbereich von zwei Siloelementen und

Fig. 11    schematisch ein Fischsilo mit zylinderförmigen Fenstergittern.

In den Figuren ist eine Offshore-Fischfarm zur Aufzucht und Haltung von Fischen oder dergleichen Wassertieren dargestellt, die in ihrem grundsätzlichen Aufbau eine halbtauchfähige Schwimmplattform 1, einen Grundrahmen 2 und die Schwimmplattform 1 mit dem Grundrahmen 2 verbindende flutbare Auftriebssäulen 3 mit nicht gezeigten Lenzpumpen und mit einem oder mehreren begrenzten Aufenthaltsräumen für die Fische aufweist. In die Schwimmplattform 1 sind die Aufenthaltsräume bildende Fischsilos 4 eingesetzt. Die Fischsilos 4 weisen jeweils verschließbare Gitterfenster 5 mit Fenstergittern 6 hinreichender Stabilität und Engmaschigkeit sowie eine Entsorgungseinrichtung 7, 8 für Verunreinigungen auf. Die Schwimmplattform 1 und der Grundrahmen 2 besitzen rahmenbildende Einhängedurchbrechungen 9, in welche die Fischsilos 4 mittels Hebezeuge eingesetzt werden können. Die Fischsilos 4 sind in über ihren Umfang und den Umfang der Einhängedurchbrechungen 9 verteilte Vertikalführungen 10 in der Schwimmplattform 1 und dem Grundrahmen 2 höhenbeweglich geführt und können in vorgegebenen Höhenstellungen arretiert werden. Eine der erforderlichen Arretiereinrichtungen 11 zur Lagesicherung ist lediglich schematisch angedeutet. Es besteht auch die Möglichkeit, mehrere Fischsilos 4 in eine durch Querstege 12 entsprechend unterteilte Einhängedurchbrechung von Schwimmplattform 1 und Grundrahmen 2 einzusetzen. Ferner können die Fischsilos 4 aus mehreren nebeneinander und/oder übereinander angeordneten Siloelementen 13 baukastenartig zusammengesetzt sein, beispielsweise mittels Außenflansche 14 benachbarter Siloelemente 13 übergreifender Klemmschienen 15. Jedes Siloelement 13 weist ein oder mehrere verschließbare Gitterfenster 5 auf, damit durchfließender Wasserstrom gewährleistet ist. Die Fischsilos 4 können einen runden oder mehreckigen Querschnitt aufweisen und bestehen bevorzugt aus glasfaserverstärktem Kunststoff. Ferner besitzen die Fischsilos 4 jeweils einen trichterartigen Boden 16, wobei im Bodentiefsten eine Pumpe 7 mit einer absperrbaren Abführleitung 8 als Entsorgungseinrichtung für die anfallenden Verunreinigungen angeordnet ist. In die Fischsilos 4 können Frischwasserleitungen 17 und gegebenenfalls Sauerstoffleitungen bzw. Belüftungsleitungen eintauchen, so daß Frischwasservorsorgung und Sauerstoffversorgung möglich ist. Die Gitterfenster 5 sind mittels motorisch betriebener Schieber 18 oder Hubtore verschließbar. Die Fenstergitter 6 bestehen aus hochfestem Kunststoff oder korrosionsbeständigem Stahl. Der Grundrahmen 2 ist aus Gründen der Gewichtsersparnis als Kastenkonstruktion aus Stahlbeton mit geschäumter Kunststoffüllung 19, z. B. Polystyrolfüllung ausgebildet.

Grundsätzlich können die Gitterfenster 5 in unterschiedlicher Silohöhe und beliebiger Verteilung angeordnet sein. Nach einem Vorschlag der Erfindung mit selbständiger Bedeutung ist jedoch vorgesehen, daß die Gitterfenster 5 in vorgegebenen Höhenabständen und niveaugleicher Verteilung auf dem Umfang der Fischsilos 4 angeordnet und mittels umlaufender Fenstergitter 6 gesichert sind. Bei z. B. zylindrischen Fischsilos 4 sind die Gitterfenster 5 in vorgegebenen Höhenabständen kreisförmig auf dem Umfang der Fischsilos verteilt und mittels zylinderförmiger Fenstergitter 6 gesichert. Derartige Maßnahmen gewährleisten einen optimalen Wasserdurchfluß bzw. eine optimale Wasserstromgeschwindigkeit in den Fischsilos 4.

**Patentansprüche**

1. Offshore-Fischfarm zur Aufzucht und Haltung von Fischen oder dergleichen Wassertieren, mit einer halbtauchfähigen Schwimmplattform (1), einem Grundrahmen (2) und die Schwimmplattform (1) mit dem Grundrahmen (2) verbindenden flutbaren Auftriebssäulen (3) und mit einem oder mehreren begrenzten Aufenthaltsräumen für die Fische, wobei in die Schwimmplattform aufenthaltsräumebildende Fischsilos (4) eingesetzt sind, **dadurch gekennzeichnet,** daß die Fischsilos (4) jeweils verschließbare Gitterfenster (5) mit Fenstergittern (6) mit hinreichender Stabilität gegen mechanische Beanspruchungen und fischundurchlässiger Engmaschigkeit sowie eine Entsorgungseinrichtung (7, 8) für Verunreinigungen aufweisen.

2. Offshore-Fischfarm nach Anspruch 1, dadurch gekennzeichnet, daß die Schwimmplattform (1) und der Grundrahmen (2) rahmenbildende Einhängedurchbrechungen (9) für die Fischsilos (4) aufweisen.

3. Offshore-Fischfarm nach Anspruch 1 oder 2, dadurch gekennzeichnet, daß die Fischsilos (4) in über ihren Umfang und den Umfang der Einhängedurchbrechungen (9) verteilte Vertikalführungen (10) in der Schwimmplattform (1) und in dem Grundrahmen (2) höhenbeweglich geführt und in vorgegebenen Höhenstellungen arretierbar sind.

4. Offshore-Fischfarm nach einem der Ansprüche 1 bis 3, dadurch gekennzeichnet, daß mehrere Fischsilos (4) in eine durch Querstege (12) entsprechend unterteilte Einhängedurchbrechung (9) von Schwimmplattform (1) und Grundrahmen (2) einsetzbar sind.

5. Offshore-Fischfarm nach einem der Ansprüche 1 bis 4, dadurch gekennzeichnet, daß die Fischsilos (4) aus mehreren nebeneinander und/oder übereinander angeordneten Siloelementen (13) baukastenartig bzw. zerlegbar zusammengesetzt sind und jedes Siloelement (13) ein oder mehrere verschließbare Gitterfenster (5) aufweist.

6. Offshore-Fischfarm nach einem der Ansprüche 1 bis 5, dadurch gekennzeichnet, daß die Fischsilos (4) einen runden oder mehreckigen Querschnitt aufweisen.

7. Offshore-Fischfarm nach einem der Ansprüche 1 bis 6, dadurch gekennzeichnet, daß die Fischsilos (4) aus korrosionsbeständigem Stahl, Stahlbeton oder Kunststoff, z. B. glasfaserverstärktem Kunststoff bestehen.

8. Offshore-Fischfarm nach einem der Ansprüche 1 bis 7, dadurch gekennzeichnet, daß die Fischsilos (4) jeweils einen trichterartigen Boden (16) aufweisen und im Bodentiefsten eine Pumpe (7) und eine absperrbare Abführleitung (8) als Entsorgungseinrichtung angeordnet ist.

9. Offshore-Fischfarm nach einem der Ansprüche 1 bis 8, dadurch gekennzeichnet, daß in die Fischsilos Frischwasserleitungen (17) und gegebenenfalls Sauerstoff/Belüftungsleitungen eintauchen.

10. Offshore-Fischfarm nach einem der Ansprüche 1 bis 9, dadurch gekennzeichnet, daß die Gitterfenster (5) mittels manuell oder motorisch betriebener Schieber (10) oder Hubtore verschließbar sind.

11. Offshore-Fischfarm nach einem der Ansprüche 1 bis 10, dadurch gekennzeichnet, daß die Fenstergitter (6) aus hochfestem Kunststoff oder korrosionsbeständigem Stahl bestehen.

12. Offshore-Fischfarm nach einem der Ansprüche 1 bis 11, dadurch gekennzeichnet, daß die Gitterfenster (5) in unterschiedlicher Silohöhe und beliebiger Verteilung angeordnet sind.

13. Offshore-Fischfarm nach einem der Ansprüche 1 bis 11, dadurch gekennzeichnet, daß die Gitterfenster (5) in vorgegebenen Höhenabständen und niveaugleicher Verteilung auf dem Umfang der Fischsilos angeordnet und mittels umlaufender Fenstergitter (6), z. B. bei zylindrischen Fischsilos (4) mittels zylinderförmiger Fenstergitter (6), gesichert sind.

14. Offshore-Fischfarm nach einem der Ansprüche 1 bis 13, dadurch gekennzeichnet, daß der Grundrahmen (2) als Stahlrohrkonstruktion oder als Kastenkonstruktion aus Stahlbeton mit geschäumter Kunststoffüllung (19), z. B. Polystyrolfüllung, ausgebildet ist.

**Claims**

1. An off-shore fish farm for the rearing and keeping of fish or similar water creatures, with a semi-submersible floating platform (1), a base frame (2) and floodable buoyancy pillars (3) connecting the floating platform (1) to the base frame (2), and with one or more limited storage spaces for the fish, in which fish silos (4) forming storage spaces are fitted into the floating platform, *characterized in that* the fish silos (4) each possess closable grating windows (5) with window gratings (6) having adequate stability against mechanical stresses and a closeness of mesh that does not permit fish to pass, as well as refuse disposal appliances (7, 8) for polluting material.

2. An off-shore fish farm according to Claim 1, *characterized in that* the floating platform (1) and the base frame (2) possess suspension apertures (9) for the fish silos (4).

3. An off-shore fish farm according to Claim 1 or 2, *characterized in that* the fish silos (4) are guided with vertical movement in vertical guides (10) distributed around their periphery and around the periphery of the suspension apertures (9) in the floating platform (1) and in the base frame (2), and can be clamped at specified levels.

4. An off-shore fish farm according to one of Claims 1 to 3, *characterized in that* several fish silos (4) can be inserted into a suspension aperture (9) of the floating platform (1) and the base frame (2) appropriately subdivided by transverse bars (12).

5. An off-shore fish farm according to one of Claims 1 to 4, *characterized in that* the fish silos (4) are assembled from several silo units (13) arranged side by side and/or one over another in a building block arrangement that can be dismantled, and that each silo unit (13) possesses one or more closable grating windows (5).

6. An off-shore fish farm according to one of Claims 1 to 5, *characterized in that* the fish silos (4) have a circular or polygonal cross-section.

7. An off-shore fish farm according to one of Claims 1 to 6, *characterized in that* the fish silos (4) consist of corrosion-resisting steel, reinforced concrete or plastics, e.g. glass-reinforced plastics.

8. An off-shore fish farm according to one of Claims 1 to 7, *characterized in that* each of the fish silos (4) has a funnel-shaped base (16), and a pump (7) and a closable outlet pipe (8) are arranged as waste-disposal equipment, in the base foot.

9. An off-shore fish farm according to one of Claims 1 to 8, *characterized in that* freshwater pipes (17) and if required oxygen/aeration pipes dip into the fish silos.

10. An off-shore fish farm according to one of Clams 1 to 9, *characterized in that* the grating windows (5) can be closed by means of manually or motor-driven sliders (10) or lifting doors.

11. An off-shore fish farm according to one of Claims 1 to 10, *characterized in that* the window gratings (6) consist of high strength plastics or of corrosion-resisting steel.

12. An off-shore fish farm according to one of Claims 1 to 11, characterized in that the grating windows (5) are arranged at different silo heights and in any distribution.

13. An off-shore fish farm according to one of Claims 1 to 11, characterized in that the grating windows (5) are arranged at predetermined vertical distances from each other and distributed at the same level around the periphery of the fish silo, and are secured by means of rotating window gratings (6) e.g. for cylindrical fish silos (4) by means of window gratings (6) of cylindrical shape.

14. An off-shore fish farm according to one of Claims 1 to 13, characterized in that the base frame (2) is formed as a steel tube structure or as a box structure made of reinforced concrete with a foamed plastic filling (19) e.g. a polystyrene filling.

**Revendications**

1. Ferme à poissons en eaux côtières pour l'élevage et l'entretien de poissons ou autres animaux aquatiques, avec une plate-forme flottante (1) semi-submersible, un châssis principal (2) et des colonnes élévatrices (3) flottantes reliant la plate-forme flottante (1) au châssis principal (2) et avec un ou plusieurs espaces de séjour clos pour les poissons, tandis que des silos à poissons (4) formant les espaces de séjour sont insérés dans la plate-forme flottante, **caractérisée** en ce que les silos à poissons (4) présentent chacun des fenêtres grillagées (5) pouvant être obturées, avec des grillages (6) de fenêtres, avec un stabilité suffisante contre les contraintes mécaniques et une maille assez étroite pour empêcher le passage des poissons, ainsi qu'un dispositif épurateur (7, 8) pour les souillures.

2. Ferme à poissons en eaux côtières selon la revendication 1, caractérisée en ce que la plate-forme flottante (1) et le châssis principal (2) présentent des ouvertures (9) constituant des châssis de suspension pour les silos à poissons (4).

3. Ferme à poissons en eaux côtières selon la revendication 1 ou 2, caractérisée en ce que les silos à poissons (4) sont guidés en étant mobiles en hauteur dans des guides verticaux (10) répartis sur leur périphérie et sur la périphérie des ouvertures de suspension (9) dans la plate-forme flottante (1) et dans le châssis principal (2), et peuvent être immobilisés dans des positions de hauteur prédéterminées.

4. Ferme à poissons en eaux côtières selon une des revendications 1 à 3, caractérisée en ce que plusieurs silos à poissons (4) peuvent être insérés dans une ouverture de suspension (9) de la plate-forme flottante (1) et du châssis principal (2) subdivisée en conséquence par des barres transversales (12).

5. Ferme à poissons en eaux côtières selon une des revendications 1 à 4, caractérisée en ce que les silos à poissons (4) sont composés de plusieurs éléments de silos (13) disposés côte-à-côte et/ou superposés, constitués de pièces assemblées démontables, et en ce que chaque élément de silo (13) présente une ou plusieurs fenêtres grillagées (5) pouvant être obturées.

6. Ferme à poissons en eaux côtières selon une des revendications 1 à 5, caractérisée en ce que les silos à poissons (4) présentent une section ronde ou polygonale.

7. Ferme à poissons en eaux côtières selon une des revendications 1 à 6, caractérisée en ce que les silos à poissons (4) sont en acier résistant à la corrosion, en béton armé ou en matière plastique, par exemple en matière plastique armée de fibres de verre.

8. Ferme à poissons en eaux côtières selon une des revendications 1 à 7, caractérisée en ce que les silos à poissons (4) présentent chacun un fond (16) en forme d'entonnoir et en ce qu'une pompe (7) et une conduite d'évacuation (8) sont disposées au point le plus bas du fond en tant que dispositif d'épuration.

9. Ferme à poissons en eaux côtières selon une des revendications 1 à 8, caractérisée en ce que des conduites (17) d'eau fraîche et, le cas échéant, des conduites d'oxygène/aération plongent dans les silos à poissons.

10. Ferme à poissons en eaux côtières selon une des revendications 1 à 9, caractérisée en ce que les fenêtres grillagées (5) peuvent être obturées au moyen de volets coulissants (10) actionnés manuellement ou par des moteurs, ou au moyen de portes levantes.

11. Ferme à poissons en eaux côtières selon une des revendications 1 à 10, caractérisée en ce que les grillages (6) des fenêtres sont en matière plastique à haute résistance ou en acier résistant à la corrosion.

12. Ferme à poissons en eaux côtières selon une des revendications 1 à 11, caractérisée en ce que les fenêtres grillagées (5) sont réparties à volonté et à différentes hauteurs sur les silos.

13. Ferme à poissons en eaux côtières selon une des revendications 1 à 11, caractérisée en ce que les fenêtres grillagées (5) sont réparties, avec des écarts en hauteur prédéterminés et sur des mêmes niveaux, sur la périphérie des silos à poissons et sont protégées au moyen d'un grillage de fenêtres (6) qui les entoure, par exemple, dans le cas de silos à poissons (4) cylindriques, au moyen de grillages de fenêtres (6) de forme cylindrique.

14. Ferme à poissons en eaux côtières suivant une des revendications 1 à 13, caractérisée en ce que le châssis principal (2) est construit en tubes d'acier ou sous la forme d'un caisson en béton armé avec un remplissage de mousse plastique (19), par exemple un remplissage de polystyrène.

Fig. 1

Fig. 2

EP 0 347 489 B1

_Fig. 3_

_Fig. 4_

10

*Fig. 5*

*Fig. 6*

_Fig. 7_

_13_

_6_

_5_

_4_

_18_

_5_

_6_

_Fig. 8_

EP 0 347 489 B1

_Fig. 9_

_Fig. 10_

_Fig. 11_

13